# DEMANDE DE BREVET EUROPEEN

(11) **EP 4 485 088 A1**
(43) Date de publication de la demande: **01.01.2025**
(21) Numéro de dépôt: 24182115.6
(22) Date de dépôt: 13.06.2024
(51) Int. Cl.: G04B 37/22, G04B 45/00, A44C 27/00, G04B 19/12, C23C 16/56, C23C 14/58

(54) **PROCÉDÉ DE RETRAIT D'UN MATÉRIAU CÉRAMIQUE**

(30) Priorité: 28.06.2023 CH 6982023
(71) Demandeur: Richemont International S.A., 1752 Villars-sur-Glâne (CH)
(72) Inventeur: NOIRAUD, Guilhem, 2300 La Chaux-de-Fonds (CH); MONTINARO, Enrica, 3012 Bern (CH); GAUTIER, Cyrille, 2300 La Chaux-de-Fonds (CH)
(74) Mandataire: LLR

(57) **Abrégé**

L'invention se rapporte à un procédé de retrait contrôlé d'une couche de matériau céramique sur une pièce (1) à l'aide d'un traitement par plasma sous vide afin de réaliser un gravage physico-chimique contrôlé de la couche de matériau céramique.

## Description

### DOMAINE TECHNIQUE DE L'INVENTION

La présente invention se rapporte à un procédé de retrait d'un matériau céramique tel qu'un oxyde formé en couche d'une épaisseur de l'ordre des nanomètres (quelques nanomètres jusqu'à plusieurs centaines de nanomètres).

### ARRIÈRE-PLAN TECHNIQUE DE L'INVENTION

Il a déjà été proposé, dans la demande EP 3 896 193, de former un composant horloger muni d'un système optique interférentiel capable de changer l'aspect visuel d'au moins une partie du composant permettant à ce dernier d'être sélectivement décoré selon une grande variété de couleurs possible. Le composant est formé d'un corps à base d'un premier matériau à décorer dont la surface est recouverte du système optique interférentiel formé par une couche d'absorption d'un deuxième matériau et au moins une couche de transmission d'un troisième matériau céramique transparent. La couleur visible en surface est, par phénomène d'interférence au travers de ladite au moins une couche de transmission, modulée à partir de la lumière partiellement réfléchie de la couche d'absorption.

Lors de la production d'un tel composant, si une partie présente un défaut lié à une étape en amont du processus de fabrication du système optique interférentiel (galvanisation, rinçage, pollution, etc.), pendant le processus de fabrication (panne, mauvais dépôt, adhérence insuffisante, etc.) ou en aval du processus de fabrication (éclat, raie, etc.), le composant doit être mis au rebut.

Une solution pourrait consister à polir la surface supérieure pour retirer la couche de transmission et tenter de récupérer une ébauche réutilisable pour le processus de fabrication afin de ne pas perdre tout l'effort déjà investi pour commencer à former le composant.

Toutefois, cette solution induit des inconvénients. En effet, elle dégrade mécaniquement le composant (torsion, matage, etc.), dégrade l'esthétique du composant voire détériore d'autres couches que celle de transmission (les épaisseurs pouvant différer suivant les conditions de fabrication), génère de nombreuses étapes de traitement et présente un risque pour la santé avec l'émission de microparticules de céramique.

Le document EP 3 536 826 décrit la fabrication d'un décor métallique sur un composant horloger qui reprend la même courbure que la surface supérieure du composant horloger. À la fin du procédé, dans le but de retirer la troisième couche en oxyde de titane ou en oxyde de silicium, il est prévu une étape i de retrait par gravage humide à base d'acide fluorhydrique. Toutefois, un tel gravage humide est peu sélectif et endommage uniformément toute la pièce horlogère, c'est-à-dire, y compris les couches inférieures et le décor métallique, à cause de son immersion dans la solution de gravage.

Ainsi, la solution du document EP 3 536 826 induit également des inconvénients. En effet, elle dégrade chimiquement le composant notamment esthétiquement, détériore d'autres couches que celle de transmission (les épaisseurs pouvant différer suivant les conditions de fabrication), génère de nombreuses étapes de traitement et ne répond donc pas au besoin cité ci-dessus.

### RÉSUMÉ DE L'INVENTION

L'invention a pour but de proposer un procédé de retrait contrôlé, limitant les rejets nocifs dans l'atmosphère, d'un matériau prédéterminé tel qu'une (ou plusieurs) couche(s) d'un matériau céramique en ne détériorant pas ou peu les couches présentes en-dessous formées d'un matériau différent du matériau céramique à retirer afin de pouvoir retrouver une ébauche de pièce réutilisable pour notamment le dépôt d'une (ou de plusieurs) nouvelle(s) couche(s) d'un nouveau matériau céramique.

À cet effet, l'invention a pour objet un procédé de retrait contrôlé d'une couche de matériau céramique formée sur au moins une partie de la surface externe d'une pièce horlogère, caractérisé en ce que le procédé comporte une étape de traitement de la couche de matériau céramique par plasma sous vide formé à partir d'au moins un flux de gaz injecté réactif chimiquement avec ledit matériau céramique afin de réaliser un gravage physico-chimique contrôlé de la couche de matériau céramique.

Avantageusement selon l'invention, le traitement par plasma sous vide va recombiner chimiquement la couche de matériau céramique avec le gaz réactif pour retirer très majoritairement la couche de matériau céramique voire uniquement la couche de matériau céramique. Les couches en-dessous ou n'étant pas protégées par le matériau céramique ne réagissent donc pas ou peu et ne sont donc pas ou très peu détériorées.

Typiquement, une couche métallique en-dessous du matériau céramique restera intacte ou quasi-intacte grâce au bon contrôle de gravage du procédé et la pièce rectifiée peut être réintroduite dans un processus de fabrication tel qu'une retouche de la couche métallique défectueuse en-dessous et/ou un remplacement de la couche de matériau céramique retirée. Les pièces défectueuses n'ont plus à être systématiquement jetées au rebut.

En outre, grâce au traitement plasma sous vide, les sous-produits de réaction sont immédiatement évacués de l'enceinte du réacteur ce qui évite qu'ils soient relâchés dans l'atmosphère ambiante. Ces sous-produits peuvent ainsi être directement piégés et traités comme, par exemple, détruits à l'aide d'un brûleur en sortie de refoulement de la pompe à vide.

L'invention peut également comporter l'une ou plusieurs des caractéristiques optionnelles suivantes, prises seules ou en combinaison.

Le matériau céramique peut être un oxyde. Il peut ainsi comporter, par exemple, un oxyde d'aluminium, un oxyde de zinc, un oxyde de titane, un oxyde de silicium, un oxyde de zirconium, un oxyde de tantale, un oxyde d'étain, un oxyde de magnésium, un oxyde d'indium-étain et/ou un oxyde d'hafnium. Préférentiellement, le matériau céramique peut être formé à base de dioxyde de titane ou à base d'oxyde d'aluminium.

Le gaz réactif chimiquement avec ledit matériau céramique peut être un composé fluoré, du dichlore ou du bromure d'hydrogène. Le composé fluoré peut comporter de l'hydrofluoroléfine, de l'hydrofluorocarbure, du tétrafluorure de carbone, de l'hexafluorure de tungstène et/ou de l'hexafluorure de soufre. Préférentiellement, le composé fluoré peut être formé à base de tétrafluorure de carbone ou d'hydrofluoroléfine tel que du 2,3,3,3-tétrafluoro-1-propène. En outre, le flux de gaz réactif chimiquement avec ledit matériau céramique peut présenter un débit massique compris entre 10 sccm et 1000 sccm. Bien entendu, le débit massique peut être choisi par exemple en fonction de la taille du réacteur et/ou de l'épaisseur de matériau céramique à enlever et/ou du temps souhaité pour mettre en oeuvre le procédé selon l'invention.

Le plasma peut comporter en outre un deuxième flux de gaz injecté afin d'améliorer le procédé. Le deuxième flux de gaz peut ainsi comporter du dioxygène, du diazote, de l'argon, du dioxyde de carbone ou du dihydrogène notamment comme gaz de dilution et/ou comme gaz aidant à la réaction (interaction chimique ou aide au gravage). En outre, le deuxième flux de gaz peut présenter un débit massique compris entre 10 sccm et 1000 sccm.

Avant l'étape de traitement par plasma sous vide, un masque de protection ajouré peut être monté sur la pièce horlogère afin, lors l'étape de traitement par plasma sous vide, de retirer ledit matériau céramique uniquement au niveau des ajourages du masque de protection. En l'espèce, le masque de protection peut être obtenu, par exemple, à l'aide d'une étape de photolithographie, d'une étape d'impression par tampographie ou d'une étape d'impression par jet d'encre. Ainsi, le procédé formerait un retrait contrôlé de seulement une partie du matériau céramique pour permettre par exemple d'offrir une variation de couleur de la pièce corrigée et non la suppression sélective totale du matériau céramique. Il peut également être avantageux de retirer localement le matériau céramique selon toute son épaisseur au niveau des ajourages du masque afin, par exemple, de former des cavités dont le fond est formé par la couche métallique située en-dessous du matériau céramique pour bénéficier, à titre d'exemple, d'une surface supérieure isolante électriquement et des fonds de cavités conducteurs électriquement pour permettre un dépôt galvanique sélectif plus ou moins épais.

Enfin, le procédé comporte préférentiellement, après l'étape de traitement de la couche de matériau céramique par plasma sous vide, une étape de dépôt d'au moins une nouvelle couche de matériau céramique sur au moins une partie de la surface externe de la pièce horlogère. Ainsi, grâce au procédé selon l'invention, une pièce horlogère rectifiée est formée avec un système optique interférentiel capable de changer l'aspect visuel d'au moins une partie de la pièce horlogère permettant à cette dernière d'être sélectivement décorée selon une grande variété de couleurs possible. Préférentiellement, l'étape de dépôt d'au moins une nouvelle couche de matériau céramique est réalisée par une méthode ALD.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- la figure 1 est une vue schématique d'un exemple de pièce d'horlogerie selon l'invention ;
- la figure 2 est une vue en coupe d'un exemple de pièce à traiter avec le procédé selon l'invention ;
- la figure 3 est une vue schématique d'un exemple de réacteur utilisable pour exécuter le procédé selon l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionnés d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

Par « spectre visible humain », on entend le domaine de longueurs d'onde compris entre 380 et 780 nm au sens de la norme ISO/CIE 11664-3:2019 de la Commission Internationale de l'Éclairage « CIE ».

Par « matériau céramique », on entend un matériau, déposé sous forme cristalline et/ou amorphe, comprenant des oxydes notamment métalliques tels que l'oxyde d'aluminium (alumine, Al₂O₃), l'oxyde de zinc (ZnO), l'oxyde de titane (TiO₂), l'oxyde de silicium (SiO₂), l'oxyde de zirconium (zircone, ZrO₂), l'oxyde de tantale (Ta₂O₅), l'oxyde d'étain (SnO₂), l'oxyde de magnésium (MgO), l'oxyde d'indium-étain (parfois abrégé ITO en anglais, combinaison de In₂O₃ et de SnO₂) et l'oxyde d'hafnium (HfO₂).

Par « composé fluoré », on entend une molécule comportant du fluor (F) et destinée à réagir chimiquement avec le matériau céramique, telle que de l'hydrofluoroléfine (HFO), de l'hydrofluorocarbure (HFC), du tétrafluorure de carbone (CF₄), de l'hexafluorure de tungstène (WF₆) et/ou de l'hexafluorure de soufre (SF₆).

L'unité « sccm » est une abréviation anglaise de « Standard Cubic Centimeters per Minute ». Elle est l'unité de travail la plus répandue de débit massique d'un gaz. Cette unité correspond au débit du gaz injecté dans l'enceinte sous vide en cm^{3·}min⁻¹ aux conditions standards de température et de pression.

Par « pièce d'horlogerie », on entend tous les types d'instruments de mesure ou de comptage du temps tels que les pendules, les pendulettes, les montres, etc...

Par « mouvement horloger 3 », on entend tous les types de mécanisme capables de compter le temps qu'ils soient alimentés à base d'énergie mécanique (par exemple un barillet) ou électrique (par exemple une batterie).

Par « habillage 2 », on entend tous les types de dispositifs capables de contenir, afficher, décorer et/ou commander un mouvement horloger 3 comme, par exemple, tout ou partie d'une boîte, d'un bracelet ou d'un affichage.

Par « sous vide », on entend une pression si basse qu'elle caractérise un vide, c'est-à-dire inférieure ou égale à 10 mbar et typiquement, entre 10 mbar et 10⁻³ mbar (ou entre 10³ Pa et 10⁻¹ Pa).

Par « à base de », on entend un matériau ou alliage constituant au moins 50 % en masse totale ou poids d'un élément donné. Typiquement, l'expression « le matériau céramique est formé à base de dioxyde de titane » signifie au moins 50 % de dioxyde de titane en masse totale ou poids, c'est-à-dire y compris jusqu'à 100 %.

La pièce 1 a été développée pour s'appliquer au domaine horloger. Ainsi, la pièce 1 peut former tout ou partie d'un habillage 2 horloger comme tout ou partie d'un cadran, d'un affichage tel qu'une aiguille ou un disque, d'une boîte, d'un bracelet, d'une glace ou d'un organe de commande tel qu'une couronne ou un bouton-poussoir. Bien entendu, l'invention peut plus généralement s'appliquer à un article de décoration pour une application telle que, par exemple, la bijouterie, la joaillerie, la maroquinerie, les arts de la table ou les instruments d'écriture.

Plus précisément, l'invention a été développée pour rectifier une pièce 1 expliquée par exemple dans le document EP 3 896 193. Une telle pièce 1 avant mise en oeuvre du procédé selon l'invention est formée d'un corps 10 à base d'un matériau à décorer ou à protéger. Selon un mode de réalisation de l'invention, le corps 10 de la pièce 1 est au moins partiellement recouverte d'au moins un système optique interférentiel 40 afin de changer l'aspect visuel de la partie du corps 10 sur lequel est monté le système optique interférentiel 40. Ainsi, le système optique interférentiel 40 peut recouvrir la totalité de la surface externe du corps 10 ou seulement une partie, comme une face ou une partie d'une face.

De plus, avantageusement selon ce mode de réalisation de l'invention, la pièce 1 peut être décorée selon au moins une nuance de couleur particulière suivant qu'il comprenne un ou plusieurs système(s) optique interférentiel(s) 40. En effet, chaque système optique interférentiel 40 permet à la pièce 1 de pouvoir être sélectivement décoré selon au moins une nuance de couleur très précise parmi une grande variété de couleurs possibles et selon une très faible épaisseur. On comprend qu'il est donc possible d'appliquer la décoration de la pièce 1 sans adaptation d'implantation particulière de ce dernier.

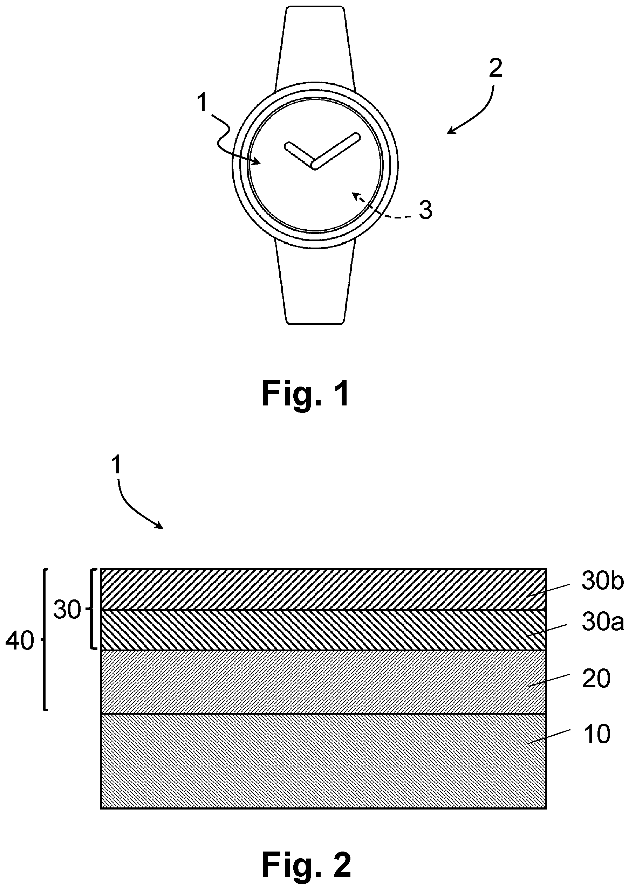

Comme illustré dans l'exemple de la figure 2, le système optique interférentiel 40 comporte une couche 20 d'absorption métallique et au moins une couche 30, 30a, 30b de transmission en matériau céramique recouvrant au moins une partie de la pièce 1 afin d'au moins partiellement transmettre la lumière ambiante pour modifier l'aspect visuel de la pièce 1. La couche 20 d'absorption est déposée sur le corps 10 et est choisie afin que ses coefficients de son indice de réfraction complexe permettent au système optique interférentiel 40 d'obtenir un haut contraste interférentiel C sur le spectre visible humain. Bien entendu, en variante, le corps 10 et la couche 20 d'absorption peuvent être d'un seul tenant, c'est-à-dire former une seule pièce en un unique matériau.

Chaque couche 30, 30a, 30b de transmission est obtenue préférentiellement par une méthode ALD (venant des termes anglais « Atomic Layer Déposition ») pour sa capacité à déposer de manière précise de fines couches de matériau. En effet, la méthode ALD est un procédé de dépôt de couches atomiques permettant donc un dépôt en couche très mince et uniforme, c'est-à-dire typiquement à ± 1 nm. Plus que la valeur de l'épaisseur, c'est l'uniformité de l'épaisseur de la (ou des) couche(s) 30, 30a, 30b de transmission qui est particulièrement déterminante pour la qualité du système optique interférentiel 40 notamment par la netteté des couleurs obtenues. La méthode ALD consiste à exposer une surface successivement à différents précurseurs chimiques afin d'obtenir des couches ultra-minces de matériau céramique. La méthode ALD étant très connue, elle ne sera pas davantage expliquée ci-dessous. Chaque couche 30, 30a, 30b de transmission comprend préférentiellement un matériau céramique que la très faible épaisseur (entre 1 et 100 nm) rend quasi-transparent au spectre visible humain.

Selon un autre mode de réalisation de l'invention, le corps 10 de la pièce 1 est au moins partiellement recouverte d'au moins une couche de protection en matériau céramique, tel que décrit par exemple dans le document EP 3 456 859.

Bien entendu, le procédé selon l'invention sera également efficace même si le matériau céramique n'est pas déposé par une méthode ALD comme par exemple obtenu par un dépôt physique en phase vapeur.

Lors de la production d'une telle pièce 1, si une partie de cette dernière présente un défaut lié à une étape en amont du processus de fabrication du système optique interférentiel (galvanisation, rinçage, pollution, etc.), pendant le processus de fabrication (panne, mauvais dépôt, adhérence insuffisante, etc.) ou en aval du processus de fabrication (éclat, raie, etc.), il a été constaté qu'il n'existe pas d'autre solution que de mettre la pièce 1 au rebut.

L'invention a ainsi pour but de proposer un procédé de retrait contrôlé, limitant les rejets nocifs dans l'atmosphère, du matériau céramique tel qu'une (ou plusieurs) couche(s) 30, 30a, 30b en ne détériorant pas ou peu le corps 10 et la couche 20 d'absorption afin de pouvoir retrouver une ébauche de pièce 1 réutilisable pour notamment le dépôt d'une (ou de plusieurs) nouvelle(s) couche(s) 30, 30a, 30b d'un matériau céramique.

L'invention a pour objet un procédé de retrait contrôlé d'une couche 30, 30a, 30b de matériau céramique formée sur au moins une partie de la surface externe d'une pièce 1 horlogère. Avantageusement selon l'invention, le procédé comporte une étape de traitement de la couche 30, 30a, 30b de matériau céramique par plasma sous vide formé à partir d'au moins un flux de gaz injecté réactif chimiquement avec ledit matériau céramique afin de réaliser un gravage physico-chimique contrôlé de la couche 30, 30a, 30b de matériau céramique.

Avantageusement selon l'invention, le traitement par plasma sous vide va recombiner chimiquement la couche 30, 30a, 30b de matériau céramique avec le gaz réactif injecté pour retirer très majoritairement la couche 30, 30a, 30b de matériau céramique voire uniquement la couche 30, 30a, 30b de matériau céramique. Chaque couche 10, 20 en-dessous du matériau céramique ou n'étant pas protégée par le matériau céramique ne réagit donc pas ou peu avec le gaz réactif injecté et n'est donc pas ou très peu détériorée.

Typiquement, la couche 20 d'absorption métallique en-dessous du matériau céramique restera avantageusement intacte ou quasi-intacte grâce au bon contrôle de gravage du procédé selon l'invention. La pièce rectifiée sélectivement peut être réintroduite dans un processus de fabrication tel qu'une retouche de la couche 20 d'absorption défectueuse et/ou un remplacement de la couche 30, 30a, 30b de matériau céramique retirée. Les pièces 1 défectueuses n'ont plus à être systématiquement jetées au rebut.

Ainsi, le procédé comporte préférentiellement, après l'étape de traitement de la couche 30, 30a, 30b de matériau céramique par plasma sous vide, une étape de dépôt d'au moins une nouvelle couche 30, 30a, 30b de matériau céramique sur au moins une partie de la surface externe de la pièce 1 horlogère. Ainsi, grâce au procédé selon l'invention, une pièce 1 horlogère rectifiée est formée avec un système optique interférentiel 40 capable de changer l'aspect visuel d'au moins une partie de la pièce 1 horlogère permettant à cette dernière d'être sélectivement décorée selon une grande variété de couleurs possible. Préférentiellement, l'étape de dépôt d'au moins une nouvelle couche 30, 30a, 30b de matériau céramique est réalisée par une méthode ALD.

Le matériau céramique est préférentiellement un oxyde tel que l'oxyde d'aluminium (tel que l'alumine, Al₂O₃), l'oxyde de zinc (notamment ZnO), l'oxyde de titane (notamment TiO₂), l'oxyde de silicium (notamment SiO₂), l'oxyde de zirconium (tel que la zircone, ZrO₂), l'oxyde de tantale (notamment Ta₂O₅), l'oxyde d'étain (notamment SnO₂), l'oxyde de magnésium (notamment MgO), l'oxyde d'indium-étain (notamment l'oxyde parfois abrégé ITO en anglais, combinaison de In₂O₃ et de SnO₂) et l'oxyde d'hafnium (notamment HfO₂). Le matériau céramique est formé, de manière préférée, à base de dioxyde de titane (TiO₂), c'est-à-dire comprenant entre 50 % et 100 % de dioxyde de titane (TiO₂).

Pour traiter un tel oxyde, le gaz réactif peut être un composé fluoré (c'est-à-dire comportant du fluor (F)), du dichlore (Cl₂) ou du bromure d'hydrogène (HBr). Le composé fluoré peut par exemple comporter de l'hydrofluoroléfine (HFO), de l'hydrofluorocarbure (HFC), du tétrafluorure de carbone (CF₄), de l'hexafluorure de tungstène (WF₆) et/ou de l'hexafluorure de soufre (SF₆). Préférentiellement, le composé fluoré est formé à base d'hydrofluoroléfine (HFO) qui présente un potentiel de réchauffement global réduit tel que du 2,3,3,3-tétrafluoro-1-propène (HFO-1234yf), du 1,3,3,3-tétrafluoropropène (HFO-1234ze) ou le 1-chloro-3,3,3-trifluoropropène (HFO-1233zd). Selon une autre variante, le composé fluoré est formé à base d'hydrofluorocarbure (HFC) tel que du 1,1,1,2-tétrafluoroéthane (R-134a ou HFC-134a).

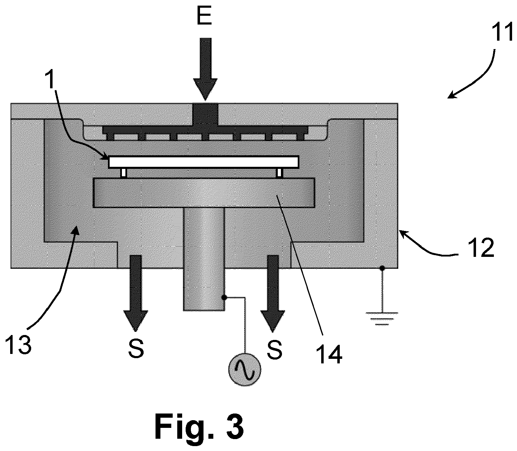

Comme visible à l'exemple de la figure 3, un réacteur 11 pour effectuer un traitement plasma sous vide selon l'invention comporte une enceinte 12 dont le volume interne 13 est maintenu sous vide. Ce dernier reçoit un porte-échantillon 14 destiné à supporter la pièce 1 (un cadran horloger dans l'exemple de la figure 3) à traiter.

Une fois, le volume interne 13 sous vide grâce à une pompe à vide, le gaz réactif y est injecté par l'entrée E et une forte différence de potentiel est appliquée entre le porte-échantillon 14 et l'enceinte 12 afin d'ioniser le volume interne 13, le plasma est alors formé et le traitement de la pièce 1 peut commencer.

Le flux de gaz réactif chimiquement avec ledit matériau céramique peut présenter un débit massique compris par exemple entre 1 sccm et 1000 sccm. Bien entendu, le débit massique est choisi notamment en fonction de la taille du réacteur 11 et/ou de l'épaisseur (par exemple comprise entre 0,5 nm et 500 nm) de matériau céramique à enlever et/ou du temps souhaité (par exemple compris entre 1 min et 1 h) pour mettre en oeuvre le procédé selon l'invention.

Par conséquent, grâce au traitement plasma sous vide, les sous-produits de réaction sont immédiatement évacués par la sortie S de l'enceinte 13 du réacteur 11 ce qui évite qu'ils soient relâchés dans l'atmosphère ambiante. Ces sous-produits peuvent ainsi être directement piégés et traités comme, par exemple, détruits à l'aide d'un brûleur en sortie de refoulement de la pompe à vide. Enfin, grâce au traitement plasma sous vide, il est possible de retirer le matériau céramique de toute la surface externe de la pièce 1.

Selon un exemple de traitement plasma sous vide selon l'invention de dioxyde de titane retiré par du tétrafluorure de carbone (CF₄), la réaction dans le réacteur 11 est : CF₄ + TiOz -7 CO₂ + TiF₄.

Le plasma peut comporter en outre un deuxième flux de gaz injecté afin d'améliorer le procédé. Le deuxième flux de gaz peut ainsi comporter du dioxygène, du diazote, de l'argon, du dioxyde de carbone ou du dihydrogène notamment comme gaz de purge et/ou comme gaz aidant à la réaction (interaction chimique ou aide au gravage). En outre, le deuxième flux de gaz peut présenter un débit massique équivalent ou différent de celui du gaz réactif, c'est-à-dire par exemple compris entre 1 sccm et 1000 sccm.

Des tests ont été effectués avec différents appareils de traitement plasma sous vide. Selon un retour d'expérience, les plages de paramètres suivants ont donné satisfaction :
- Puissance : 100 W à 2000 W
- Fréquence : 2,45 GHz à 13,56 GHz
- Flux CF₄ : 10 sccm à 1000 sccm
- Flux O₂ : 10 sccm à 1000 sccm
- Durée : 1 min à 60 min

En appliquant les paramètres ci-dessous, après quelques minutes, la décoloration de la pièce 1 (un cadran horloger dans l'exemple de la figure 3) est totale. Le matériau céramique tel que l'oxyde de titane (TiOz) est entièrement retiré et la pièce 1 défectueuse se retrouve à un stade d'ébauche avec sa coloration intermédiaire associée. Une retouche de la couche 20 d'absorption défectueuse et/ou un remplacement de la couche 30, 30a, 30b de matériau céramique retirée peut être effectuée.

On comprend donc que suivant les caractéristiques de la pièce 1 à traiter, l'homme du métier adaptera les paramètres (différence de potentiel, fréquence de la différence de potentiel, type de gaz réactif, débit de gaz réactif, type de deuxième(s) gaz, débit de deuxième(s) gaz, durée) de l'invention, par exemple à l'aide de tests de routine pour affiner le résultat souhaité.

L'invention n'est pas limitée aux modes de réalisation et variantes présentés et d'autres modes de réalisation et variantes apparaîtront clairement à la personne du métier. Ainsi, les réalisations ci-dessus sont des exemples.

À titre nullement limitatif, avant l'étape de traitement par plasma sous vide, un masque de protection ajouré peut être monté sur la pièce 1 horlogère afin, lors l'étape de traitement par plasma sous vide, de retirer ledit matériau céramique uniquement au niveau des ajourages du masque de protection. En l'espèce, le masque de protection peut être obtenu, par exemple, à l'aide d'une étape de photolithographie, d'une étape d'impression par tampographie ou d'une étape d'impression par jet d'encre. Ainsi, le procédé formerait un retrait contrôlé de seulement une partie du matériau céramique pour permettre par exemple d'offrir une variation de couleur de la pièce corrigée et non la suppression sélective totale du matériau céramique. Il peut également être avantageux de retirer localement le matériau céramique selon toute son épaisseur au niveau des ajourages du masque afin, par exemple, de former des cavités dont le fond est formé par la couche 20 d'absorption métallique située en-dessous du matériau céramique pour bénéficier, à titre d'exemple, d'une surface supérieure isolante électriquement et des fonds de cavités conducteurs électriquement pour permettre un dépôt galvanique sélectif plus ou moins épais.

## Revendications

1. Procédé de retrait contrôlé d'une couche (30, 30a, 30b) de matériau céramique formée sur au moins une partie de la surface externe d'une pièce (1) horlogère, **caractérisé en ce que** le procédé comporte une étape de traitement de la couche (30, 30a, 30b) de matériau céramique par plasma sous vide formé à partir d'au moins un flux de gaz injecté réactif chimiquement avec ledit matériau céramique afin de réaliser un gravage physico-chimique contrôlé de la couche (30, 30a, 30b) de matériau céramique.

2. Procédé selon la revendication précédente, dans lequel le matériau céramique est un oxyde.

3. Procédé selon la revendication précédente, dans lequel le matériau céramique comporte un oxyde d'aluminium, un oxyde de zinc, un oxyde de titane, un oxyde de silicium, un oxyde de zirconium, un oxyde de tantale, un oxyde d'étain, un oxyde de magnésium, un oxyde d'indium-étain et/ou un oxyde d'hafnium.

4. Procédé selon la revendication précédente, dans lequel le matériau céramique est formé à base de dioxyde de titane.

5. Procédé selon la revendication 3, dans lequel le matériau céramique est formé à base d'oxyde d'aluminium.

6. Procédé selon l'une quelconque des revendications 2 à 5, dans lequel le gaz réactif chimiquement avec ledit matériau céramique est un composé fluoré, du dichlore ou du bromure d'hydrogène.

7. Procédé selon la revendication précédente, dans lequel le composé fluoré comporte de l'hydrofluoroléfine, de l'hydrofluorocarbure, du tétrafluorure de carbone, de l'hexafluorure de tungstène et/ou de l'hexafluorure de soufre.

8. Procédé selon la revendication précédente, dans lequel le composé fluoré est formé à base de 2,3,3,3-tétrafluoro-1-propène.

9. Procédé selon l'une quelconque des revendications 5 à 8, dans lequel le flux de gaz réactif chimiquement avec ledit matériau céramique présente un débit massique compris entre 10 sccm et 1000 sccm.

10. Procédé selon l'une quelconque des revendications précédentes, dans lequel le plasma comporte en outre un deuxième flux de gaz injecté afin d'améliorer le procédé.

11. Procédé selon la revendication précédente, dans lequel le deuxième flux de gaz comporte du dioxygène, du diazote, de l'argon, du dioxyde de carbone ou du dihydrogène.

12. Procédé selon la revendication 10 ou 11, dans lequel le deuxième flux de gaz présente un débit massique compris entre 10 sccm et 1000 sccm.

13. Procédé selon l'une quelconque des revendications précédentes, dans lequel, avant l'étape de traitement par plasma sous vide, un masque de protection ajouré est monté sur la pièce (1) horlogère afin, lors l'étape de traitement par plasma sous vide, de retirer ledit matériau céramique uniquement au niveau des ajourages du masque de protection.

14. Procédé selon l'une quelconque des revendications précédentes, comportant, après l'étape de traitement de la couche (30, 30a, 30b) de matériau céramique par plasma sous vide, une étape de dépôt d'au moins une nouvelle couche (30, 30a, 30b) de matériau céramique sur au moins une partie de la surface externe de la pièce (1) horlogère.
